# EUROPÄISCHE PATENTSCHRIFT

(11) **EP 4 291 479 B1**
(45) Veröffentlichungstag und Bekanntmachung des Hinweises auf die Patenterteilung: **24.06.2026**
(21) Anmeldenummer: 22702651.5
(22) Anmeldetag: 24.01.2022
(51) Int. Cl.: B62M 6/45, B62M 6/50

(54) **VERFAHREN ZUR ANSTEUERUNG EINES ELEKTRISCHEN ANTRIEBSMOTORS EINES ELEKTRISCH ANTREIBBAREN FAHRRADES**
METHOD FOR CONTROLLING AN ELECTRIC DRIVE MOTOR OF AN ELECTRICALLY DRIVABLE BICYCLE
PROCÉDÉ DE COMMANDE D'UN MOTEUR D'ENTRAÎNEMENT ÉLECTRIQUE D'UNE BICYCLETTE À ENTRAÎNEMENT ÉLECTRIQUE

(30) Priorität: 15.02.2021 DE 102021201405
(43) Veröffentlichungstag der Anmeldung: 20.12.2023
(73) Patentinhaber: Robert Bosch GmbH, 70442 Stuttgart (DE)
(72) Erfinder: WEINMANN, Matthias, 72336 Balingen (DE); BAUMGAERTNER, Daniel, 72072 Tuebingen (DE)
(86) Internationale Anmeldenummer: PCT/EP2022/051460
(87) Internationale Veröffentlichungsnummer: WO 2022/171420

(56) Entgegenhaltungen:
- EP-A1- 2 706 005
- EP-A1- 2 743 166
- EP-A2- 0 650 887

## Beschreibung

### Stand der Technik

Die vorliegende Erfindung betrifft ein Verfahren zur Ansteuerung eines elektrischen Antriebsmotors eines elektrisch antreibbaren Fahrrades, sowie ein Computerprogramm, ein maschinenlesbares Speichermedium und eine Auswerteeinheit, welche eingerichtet sind, ein solches Verfahren auszuführen.

Aus dem Stand der Technik sind Zweiräder, insbesondere Fahrräder wie e-Bikes/Pedelecs bekannt, welche in der Lage sind, eine durch einen Benutzer des Zweirades aufgebrachte Antriebskraft zur Fortbewegung des Zweirades mittels eines Motors, insbesondere eines Elektromotors zu unterstützen. Bei einem Pedelec beispielsweise wird eine solche Motorunterstützung nur dann zugelassen, wenn der Fahrer des Fahrrades zusätzlich selbst pedaliert. Um festzustellen, ob diese Voraussetzung erfüllt ist, werden meist verschiedene Sensoren eingesetzt, die eingerichtet sind, das Pedalieren des Fahrers zu erfassen. Beispiele für solche Sensoren sind Drehmomentsensoren und Drehzahlsensoren.

Es sei auf die Druckschriften EP 2 706 005 A1, EP 0 650 887 A2 und EP 2 743 166 A1 verwiesen. Die Druckschrift EP2706005A1 beschreibt ein Fahrrad mit Motorunterstützung und ein Verfahren zur Ansteuerung eines solchen elektrischen Antriebsmotors. Eine Aufgabe der Erfindung ist die Verbesserung des Fahrgefühls, insb. bei der Zu- und Abschaltung der Motorunterstützung.

Bei e-Bikes, welche häufig einen Drehmomentsensor am Pedal aufweisen, erfolgt eine Motorunterstützung im Allgemeinen erst nach einer Überschreitung eines Fahrerdrehmoment-Schwellenwertes, welcher z. B. bei etwa 7 Nm liegt.

Nach Überschreitung dieser Drehmomentschwelle wird mittels des Motors anschließend ein Vielfaches der Fahrerleistung für den Antrieb des Zweirades bereitgestellt.

Da der Motor bis zum Erreichen dieses Zeitpunktes i. d. R. noch nicht aktiv ist (d. h., die Drehzahl entspricht einem Wert von Null), dauert es eine gewisse Zeit, bis der Motor die Geschwindigkeit der Kurbel des Fahrrades erreicht. In diesem Zeitraum wird die Drehzahl des Motors entsprechend sehr schnell aufgebaut, da aufgrund eines verwendeten Freilaufs zur Kopplung des Motors an den Antriebsstrang des Fahrrades noch keine Gegenkraft existiert. Sobald der Freilauf im Eingriff steht, können aufgrund dessen mitunter starke Schwingungen im Antriebstrang hervorgerufen werden, welchen in diesem Zusammenhang zur teilweisen Kompensation häufig mit Verfahren zur Lastschlagdämpfung begegnet wird.

### Offenbarung der Erfindung

Gemäß der vorliegenden Erfindung wird ein Verfahren zur Ansteuerung eines elektrischen Antriebsmotors (nachfolgend auch verkürzt "Antriebsmotor" genannt) eines elektrisch antreibbaren Fahrrades (nachfolgend verkürzt auch "Fahrrad" genannt) vorgeschlagen, wobei das Fahrrad beispielsweise ein e-Bike oder ein Pedelec ist. Der elektrische Motor ist derart mittels eines Freilaufs mit dem Antriebsstrang des Fahrrades gekoppelt, dass ein durch den Antriebsmotor erzeugbares Drehmoment über den Freilauf zu einer Antriebsunterstützung in Vorwärtsfahrtrichtung des Fahrrades führt.

In einem ersten Schritt des erfindungsgemäßen Verfahrens wird eine Trittfrequenz (auch Kadenz genannt) eines Fahrers des Fahrrades ermittelt, welche vorzugsweise auf Basis eines Drehzahlsensors des Fahrrades erfasst wird. Hierfür werden beispielsweise aus dem Stand der Technik bekannte Drehzahlsensoren eingesetzt.

In einem zweiten Schritt des erfindungsgemäßen Verfahrens wird der elektrische Antriebsmotor unter Vorgabe einer ersten vordefinierten Solldrehzahl für den Antriebsmotor, welche geringer ist, als die Trittfrequenz des Fahrers und unter Vorgabe eines ersten vordefinierten Drehmomentes für den Antriebsmotor betrieben, sofern die ermittelte Trittfrequenz des Fahrers einen vordefinierten Trittfrequenz-Schwellenwert überschreitet. Es sei darauf hingewiesen, dass das erste Drehmoment ein maximal zulässiges Drehmoment ist, welches zum Erreichen der ersten Solldrehzahl eingesetzt werden kann und entsprechend geringer sein kann. Es sei zudem darauf hingewiesen, dass der Trittfrequenz-Schwellenwert auch einem Wert von 0 Umdrehungen pro Minute entsprechen kann. Vorzugsweise umfasst das Fahrrad eine Auswerteeinheit, welche eingerichtet ist, Drehzahlinformationen des Drehzahlsensors und Drehmomentinformationen eines Drehmomentsensors des Fahrrades zu empfangen und auf Basis der Drehzahlinformationen und der Drehmomentinformationen eine Steuerung und/oder Regelung des Antriebsmotors umzusetzen. Die jeweiligen Solldrehzahlen und/oder Drehmomente und/oder korrespondierenden Schwellenwerte bzw. Größen, von welchen diese abgeleitet werden, sind vorzugsweise in einer internen und/oder externen Speichereinheit abgelegt, welche informationstechnisch mit der Auswerteeinheit verbunden ist.

Es sei darauf hingewiesen, dass sich der Antriebsmotor vor der Durchführung des zweiten Verfahrensschrittes beispielsweise eine Drehzahl von null aufweist, wobei es auch denkbar ist, dass der Antriebsmotor zu diesem Zeitpunkt eine Drehzahl aufweist, die größer als null, aber kleiner als die erste Solldrehzahl ist.

Es sei ebenfalls darauf hingewiesen, dass die hier und nachfolgend beschriebenen Solldrehzahlen und Drehmomente für den Antriebsmotor jeweils diejenigen Werte repräsentieren, die am Antriebsstrang einwirken bzw. vorliegen, da ggf. eine Übersetzung zwischen Antriebsmotor und Antriebstrang (konkret zwischen Motor und Kettenblatt) eingesetzt wird. Mit anderen Worten repräsentieren diese Werte nicht zwangsläufig die direkten Solldrehzahlen und Drehmomente an der Welle des Antriebsmotors, sondern die daraus resultierenden Werte am Antriebsstrang.

Es sei ferner darauf hingewiesen, dass es möglich ist, den Übergang vom ersten Verfahrensschritt zum zweiten Verfahrensschritt an zusätzliche Bedingungen zu knüpfen, welche beispielsweise erfordern, dass die Trittfrequenz des Fahrers nicht wieder unter einen weiteren Trittfrequenz-Schwellenwert fällt (alternativ ist es auch möglich, hier eine Hysteresefunktion usw. einzusetzen) und/oder dass die Trittfrequenz für eine vordefinierte Dauer nicht weiter ansteigt und/oder dass im Falle mehrerer aufeinanderfolgender Anfahrvorgänge ohne anschließend auftretendes Fahrerdrehmoment, zunächst ein bestimmtes Fahrerdrehmoment registriert werden muss.

In einem dritten Schritt des erfindungsgemäßen Verfahrens wird der elektrische Antriebsmotor unter Vorgabe einer zweiten vordefinierten Solldrehzahl für den Antriebsmotor, welche höher ist, als die erste Solldrehzahl und unter Vorgabe eines zweiten vordefinierten Drehmomentes für den Antriebsmotor betrieben, sofern ein durch den Fahrer auf den Antriebsstrang ausgeübtes Fahrerdrehmoment einen ersten vordefinierten Fahrerdrehmoment-Schwellenwert überschreitet. Es sei darauf hingewiesen, dass das zweite Drehmoment ein maximal zulässiges Drehmoment ist, welches zum Erreichen der zweiten Solldrehzahl eingesetzt werden kann und entsprechend geringer sein kann. Vorzugsweise entspricht das zweite Drehmoment im Wesentlichen dem ersten Drehmoment, bzw. weist zumindest eine ähnliche Größenordnung wie das erste Drehmoment auf, ohne ein mögliches Verhältnis der beiden Drehmomente zueinander dadurch einzuschränken. Vorzugsweise werden in diesem dritten Verfahrensschritt die zweite Solldrehzahl und das zweite Drehmoment derart gewählt, dass der Freilauf, welcher eingerichtet ist, den Antriebsmotor an den Antriebsstrang zu koppeln, im Eingriff steht und dass das durch den Antriebsmotor auf den Antriebsstrang ausgeübte Drehmoment bereits einen geringfügigen Zug an der Kette des Fahrrades in Vorwärtsfahrrichtung bewirkt. Davon abweichende Auswirkungen der zweiten Solldrehzahl und des zweiten Drehmomentes auf den Eingriff des Freilaufs und/oder den Zug an der Kette sind im Zusammenhang mit dem erfindungsgemäßen Verfahren aber ebenfalls denkbar. Grundsätzlich gilt für das erste Drehmoment und das zweite Drehmoment, dass diese derart festgelegt werden, dass sie im Wesentlichen keine Antriebsunterstützung, bzw. keine durch einen Fahrer des Fahrrades wahrnehmbare Antriebsunterstützung bewirken. Beispielsweise werden beide Drehmomentwerte derart festgelegt, dass sie einen Wert von 5 Nm jeweils nicht überschreiten.

In einem vierten Schritt des erfindungsgemäßen Verfahrens wird der Antriebsmotor unter Vorgabe eines dritten vordefinierten Drehmomentes für den Antriebsmotor betrieben, sofern das Fahrerdrehmoment einen zweiten vordefinierten Fahrerdrehmoment-Schwellenwert überschreitet, welcher höher ist, als der erste Fahrerdrehmoment-Schwellenwert, wobei das dritte Fahrerdrehmoment ein zu erreichendes Solldrehmoment ist und derart festgelegt ist, dass dieses eine vordefinierte Antriebsunterstützung bewirkt. Da durch den zu diesem Zeitpunkt vorzugsweise bereits bestehenden Eingriff des Freilaufs beim Übergang in den vierten Verfahrensschritt keine Differenz mehr zur Trittfrequenz des Fahrers vorliegt, ist es beim Anlegen des eigentlichen Unterstützungsdrehmomentes durch den Antriebsmotor möglich, einen Lastschlag zu verhindern, bzw. deutlich zu reduzieren. Hieraus ergeben sich zahlreiche Vorteile durch das erfindungsgemäße Verfahren, welche einen erhöhten Fahrkomfort, eine geringere Beanspruchung von Mechaniken und/oder Materialien und eine entsprechend erhöhte Haltbarkeit von Bestandteilen des Fahrrades umfassen. Ein weiterer erzielbarer Vorteil besteht darin, dass die Aktivierung der Unterstützung durch den Antriebsmotor durch das erfindungsgemäße Verfahren schneller erfolgen kann, wodurch ein besonders dynamischer/sportlicher Fahrbetrieb ermöglicht wird.

Da im zweiten und dritten Verfahrensschritt die jeweiligen Solldrehzahlen die eigentlichen Führungsgrößen bei der Steuerung und/oder Regelung des Antriebsmotors repräsentieren, können diese Verfahrensschritte einem Ansteuerungsmodus des Antriebsmotors zugeordnet werden, welcher hier Drehzahl-Ansteuerungsmodus genannt wird. Demgegenüber kann der durch den vierten Verfahrensschritt repräsentierte Ansteuerungsmodus für den Antriebsmotor als Drehmoment-Ansteuerungsmodus angesehen werden, da das dritte Drehmoment hier die eigentliche Führungsgröße bei der Steuerung und/oder Regelung des Antriebsmotors repräsentiert. Entsprechend wird beim Übergang vom dritten Verfahrensschritt in den vierten Verfahrensschritt mittels der Auswerteinheit, welche den Antriebsmotor ansteuert, vom Drehzahl-Ansteuerungsmodus in den Drehmomentansteuerungsmodus gewechselt. In diesem Zusammenhang ist es denkbar, dass die jeweiligen Ansteuerungsmodi durch zwei unabhängige Logikeinheiten und/oder Softwareeinheiten in der Auswerteinheit implementiert sind, zwischen welchen situationsabhängig gewechselt wird.

Weiterhin gemäß der vorliegenden Erfindung wird ein Verfahren zur Ansteuerung eines elektrischen Antriebsmotors eines elektrisch antreibbaren Fahrrades vorgeschlagen. Ausführungsformen des Fahrrades und eine Kopplung des Antriebsmotors an einen Antriebsstrang des Fahrrades entsprechen vorzugsweise den Erläuterungen in vorstehend beschriebenem Verfahren, weshalb zur Vermeidung von Wiederholungen auf dieses verwiesen wird.

In einem Schritt des erfindungsgemäßen Verfahrens wird ein durch einen Fahrer des Fahrrades auf einen Antriebsstrang des Fahrrades ausgeübtes Fahrerdrehmomentes und eine Trittfrequenz des Fahrers ermittelt.

In einem weiteren Schritt des erfindungsgemäßen Verfahrens wird der elektrische Antriebsmotor unter Vorgabe einer dritten vordefinierten Solldrehzahl und eines vierten vordefinierten Drehmomentes für den Antriebsmotor betrieben, sofern das Fahrerdrehmoment für einen ersten vordefinierten Zeitraum unterhalb eines dritten vordefinierten Fahrerdrehmoment-Schwellenwertes liegt. Der erste vordefinierte Zeitraum entspricht beispielsweise einem Zeitraum von 200 ms bis 300 ms oder einem davon abweichenden Zeitraum. Es sei darauf hingewiesen, dass das vierte Drehmoment ein maximal zulässiges Drehmoment ist, welches zum Erreichen der dritten Solldrehzahl eingesetzt werden kann und entsprechend geringer sein kann.

In einem weiteren Schritt des erfindungsgemäßen Verfahrens wird der elektrische Antriebsmotors unter Vorgabe einer vierten vordefinierten Solldrehzahl, welche geringer ist, als die dritte Solldrehzahl und eines fünften vordefinierten Drehmomentes für den Antriebsmotor betrieben, sofern das Fahrerdrehmoment für einen zweiten vordefinierten Zeitraum, welcher länger ist, als der erste Zeitraum, unterhalb des dritten Fahrerdrehmoment-Schwellenwertes liegt, oder sofern eine Anzahl von Pedalumdrehungen einen vordefinierten Pedalumdrehungs-Schwellenwert (z. B. eine Umdrehung) überschreitet, während das Fahrerdrehmoment (MF) unterhalb des dritten Fahrerdrehmoment-Schwellenwertes (MFS3) liegt, wobei der Antriebsmotor mittels eines Freilaufs mit dem Antriebsstrang des Fahrrades gekoppelt ist und wobei das vierte Drehmoment und das fünfte Drehmoment derart festgelegt sind, dass diese im Wesentlichen keine Antriebsunterstützung bewirken. Es sei darauf hingewiesen, dass das fünfte Drehmoment ein maximal zulässiges Drehmoment ist, welches zum Erreichen der vierten Solldrehzahl eingesetzt werden kann und entsprechend geringer sein kann. Beispielsweise werden beide Drehmomentwerte derart festgelegt, dass sie einen Wert von 4 Nm bis 5 Nm jeweils nicht überschreiten. Der zweite vordefinierte Zeitraum entspricht beispielsweise einem Zeitraum von 800 ms bis 1000 ms oder einem davon abweichenden Zeitraum.

Vorstehend beschriebenes Verfahren bietet u. a. den Vorteil, dass ein Übergang von einem Zustand einer aktiven Antriebsmotorunterstützung zu einem Zustand einer nicht aktiven Antriebsmotorunterstützung durch einen Fahrer des Fahrrades vorzugsweise weder haptisch noch akustisch wahrnehmbar ist, wodurch insbesondere ein Fahrkomfort für den Fahrer verbessert wird.

Es sei allgemein darauf hingewiesen, dass bezüglich der vorstehend beschriebenen Verfahren grundsätzlich keine Einschränkungen bezüglich möglicher Übergänge zwischen den jeweiligen Verfahrensschritten bestehen. Insbesondere in Fällen, in denen ein Fahrer des Fahrrades nicht alle erforderlichen Bedingungen für einen Übergang von einem nicht antriebsmotorunterstützten Fahrbetrieb zu einem antriebsmotorunterstützten Fahrbetrieb oder umgekehrt erfüllt (z. B., weil er einen Anfahrvorgang vorzeitig beendet oder ein kurzzeitig unterbrochenes Fahrerdrehmoment wieder aufbringt), ist es denkbar, in Abhängigkeit weiterer Randbedingungen in jeweils geeignete vorangegangene Verfahrensschritte zurück zu wechseln (z. B. in den jeweiligen Ausgangszustand, ohne die erfindungsgemäßen Verfahren darauf einzuschränken).

Zusammenfassend betrifft die vorliegende Erfindung ein Verfahren zur Ansteuerung eines elektrischen Antriebsmotors eines elektrisch antreibbaren Fahrrades, welches eine Aktivierung einer durch den elektrischen Antriebsmotor bereitgestellten Antriebsunterstützung bewirkt und ein Verfahren zur Ansteuerung eines elektrischen Antriebsmotors eines elektrisch antreibbaren Fahrrades, welches eine Deaktivierung einer durch den elektrischen Antriebsmotor bereitgestellten Antriebsunterstützung bewirkt.

Die Unteransprüche zeigen bevorzugte Weiterbildungen der Erfindung.

In einer vorteilhaften Ausgestaltung der vorliegenden Erfindung entspricht der Trittfrequenz-Schwellenwert einem Wert von 5 Umdrehungen pro Minute bis 25 Umdrehungen pro Minute, bevorzugt einem Wert von 10 Umdrehungen pro Minute bis 20 Umdrehungen pro Minute und insbesondere bevorzugt einem Wert von 15 Umdrehungen pro Minute. Ferner entspricht die Solldrehzahl vorzugsweise einem Wert von 60 % bis 99 %, bevorzugt einem Wert von 70 % bis 90 % und insbesondere bevorzugt einem Wert von 80 % der zuvor ermittelten Trittfrequenz des Fahrers. Insbesondere bevorzugt entspricht die zweite Solldrehzahl im Wesentlichen der Trittfrequenz des Fahrers. Besonders vorteilhaft entspricht die zweite Solldrehzahl genau der ermittelten Trittfrequenz des Fahrers oder einem höheren Wert.

Vorteilhaft entspricht der erste Fahrerdrehmoment-Schwellenwert einem Wert von 1 Nm bis 9 Nm, bevorzugt einem Wert von 3 Nm bis 7 Nm und insbesondere bevorzugt einem Wert von 5 Nm. Weiter entspricht der zweite Fahrerdrehmoment-Schwellenwert vorteilhaft einem Wert von 4 Nm bis 15 Nm, bevorzugt einem Wert von 6 Nm bis 12 Nm und insbesondere bevorzugt einem Wert von 7 Nm bis 9 Nm. Darüber hinaus entspricht das dritte Drehmoment vorteilhaft mindestens einem zweifachen, bevorzugt mindestens einem dreifachen und insbesondere bevorzugt mindestens einem vierfachen Wert eines jeweiligen Fahrerdrehmomentes.

In einer weiteren vorteilhaften Ausgestaltung der vorliegenden Erfindung wird ein Übergang zwischen dem zweiten Drehmoment und dem dritten Drehmoment sukzessive durchgeführt. Dies ist dadurch erreichbar, dass ein oder mehrere Zwischenwerte zwischen dem zweiten Drehmoment und dem dritten Drehmoment während der Dauer des Übergangs zwischen diesen beiden Werten vorgegeben werden, so dass ein mehr oder weniger sanfter Übergang zwischen den beiden Werten erreicht wird. Dadurch ist es möglich, eine durch einen Fahrer des Fahrrades ggf. noch geringfügig wahrnehmbare haptische und/oder akustische Auswirkung eines solchen Übergangs weiter zu verringern, so dass sich ein Fahrkomfort zusätzlich verbessern lässt.

Vorzugsweise entspricht die dritte vordefinierte Solldrehzahl im Wesentlichen der Trittfrequenz des Fahrers und besonders bevorzugt mindestens der zuvor ermittelten Trittfrequenz des Fahrers. Ferner entspricht der dritte Fahrerdrehmoment-Schwellenwert vorzugsweise einem Wert von 4 Nm bis 15 Nm, bevorzugt einem Wert von 6 Nm bis 12 Nm und insbesondere bevorzugt einem Wert von 7 Nm bis 9 Nm. Alternativ oder zusätzlich wird der elektrische Antriebsmotor deaktiviert (d. h. stromlos geschaltet), wenn das Fahrerdrehmoment für einen dritten vordefinierten Zeitraum, welcher länger ist, als der erste Zeitraum und der zweite Zeitraum, unterhalb des dritten Fahrerdrehmoment-Schwellenwertes liegt, oder wenn sich die Trittfrequenz des Fahrers zunehmend verlangsamt, während das Fahrerdrehmoment (MF) unterhalb des dritten Fahrerdrehmoment-Schwellenwertes (MFS3) liegt. Dadurch lässt sich eine im Fahrrad mitgeführte elektrische Energie (z. B. in einer Batterie) einsparen. Der dritte vordefinierte Zeitraum entspricht beispielsweise einem Zeitraum von 1500 ms bis 3000 ms oder einem davon abweichenden Zeitraum.

In einer weiteren vorteilhaften Ausgestaltung der vorliegenden Erfindung wird ein jeweiliges Drehmoment für den Antriebsmotor unter Berücksichtigung einer am Antriebsmotor anliegenden geschätzten Last festgelegt. Hierfür werden bevorzugt jeweils aktuelle Messwerte des Drehzahlsensors und des Drehmomentsensors des Fahrrades verwendet, um auch bei sich verändernden Lastsituationen (z. B. eine Bergauffahrt, ein Gangwechsel unter Volllast, usw.) zu ermöglichen, dass jeweils ein genauer Eingriffszustand (bereits im Eingriff oder noch freidrehend) des Antriebsmotors auf Basis dieser Messwerte ermittelbar ist. Diese Information wird anschließend als Stellgröße und/oder Regelgröße bei der Festlegung jeweiliger Drehmomente berücksichtigt. Es sei darauf hingewiesen, dass dies sowohl für den Vorgang der Aktivierung, als auch für den Vorgang der Deaktivierung der Antriebsmotorunterstützung vorteilhaft einsetzbar ist. Ferner ist es möglich, die geschätzte Last nur bei einem Teil der jeweiligen Drehmomentwerte der erfindungsgemäßen Verfahren zu berücksichtigen.

Weiterhin gemäß der Erfindung wird ein Computerprogramm vorgeschlagen, welches eingerichtet ist, ein Verfahren nach vorstehender Beschreibung auszuführen.

Weiterhin gemäß der Erfindung wird ein maschinenlesbares Speichermedium vorgeschlagen, auf welchem das vorstehend genannte Computerprogramm gespeichert ist. Als Speichermedium kommen beispielweise elektronische und/oder magnetische und/oder optische und/oder davon abweichende Speichermedien in Frage.

Weiterhin gemäß der Erfindung wird eine Auswerteeinheit vorgeschlagen, welche eingerichtet ist, ein Verfahren nach vorstehender Beschreibung auszuführen. Die Auswerteeinheit ist beispielsweise als ASIC, FPGA, Prozessor, digitaler Signalprozessor, Mikrocontroller, o. ä., ausgestaltet. Zudem ist es denkbar, dass die Auswerteeinheit ein Bestandteil einer Elektronikeinheit des Antriebsmotors oder eine eigenständige Komponente ist. Ferner ist es denkbar, dass die Auswerteeinheit informationstechnisch mit einer internen und/oder einer extern angebundenen Speichereinheit verbunden ist, um beispielsweise durch die Auswerteinheit empfangene und/oder berechnete Daten abzulegen. Zudem ist es denkbar, dass die Speichereinheit die oben genannte Speichereinheit ist, welche das die erfindungsgemäßen Verfahrensschritte realisierende Computerprogramm aufweist, welches durch die Auswerteeinheit ausgeführt wird.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: ein Flussdiagramm veranschaulichend Schritte eines Ausführungsbeispiels eines erfindungsgemäßen Verfahrens;
- Figur 2: ein Flussdiagramm veranschaulichend Schritte eines Ausführungsbeispiels eines weiteren erfindungsgemäßen Verfahrens; und
- Figur 3: eine schematische Ansicht erfindungsgemäßer Komponenten eines Fahrrades.

### Ausführungsformen der Erfindung

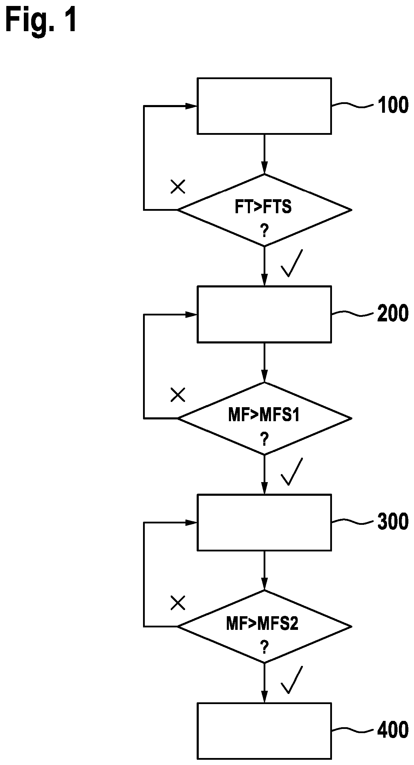

Figur 1 zeigt ein Flussdiagramm veranschaulichend Schritte eines Ausführungsbeispiels eines erfindungsgemäßen Verfahrens zur Ansteuerung eines elektrischen Antriebsmotors 10 eines elektrisch antreibbaren Fahrrades, wobei ein Ausgangszustand des Fahrrades hier ein Zustand ist, in welchem der Antriebsmotor 10 keine Antriebsunterstützung bereitstellt und in welchem der Fahrer kein Fahrerdrehmoment MF aufbringt.

Im Schritt 100 wird mittels einer Auswerteeinheit 30 des Fahrrades eine Trittfrequenz FT eines Fahrers des Fahrrades ermittelt, indem die Auswerteeinheit 30 Messsignale eines Drehzahlsensors des Fahrrades empfängt.

Sobald die Trittfrequenz FT des Fahrers einen Trittfrequenz-Schwellenwert FTS in Höhe von 15 Umdrehungen pro Minute überschreitet, wird der Antriebsmotor 10 mittels einer Ansteuerung durch die Auswerteeinheit 30 im Schritt 200 unter Vorgabe einer ersten Solldrehzahl N1, welche hier 80 % der ermittelten Trittfrequenz FT des Fahrers entspricht und eines ersten Drehmomentes M1 für den Antriebsmotor 10 betrieben. Das erste Drehmoment M1 entspricht hier einem initialen Wert von 8 Nm und wird innerhalb eines Zeitraums von 200 ms automatisch auf einen Wert von 4 Nm reduziert. Es sei darauf hingewiesen, dass das erste Drehmoment M1 ein maximal zulässiges Drehmoment ist

Sobald ein durch den Fahrer auf den Antriebsstrang des Fahrrades über die Pedale 60 ausgeübtes Fahrerdrehmoment MF einen ersten Fahrerdrehmoment-Schwellenwert MFS1 überschreitet, welcher hier einem Wert von 5 Nm entspricht, wird der Antriebsmotor 10 im Schritt 300 mit einer zweiten Solldrehzahl N2, welche hier der ermittelten Trittfrequenz FT entspricht und mit einem zweiten Drehmoment M2 für den Antriebsmotor 10 betrieben, wobei das zweite Drehmoment M2 hier einem Wert von 8 Nm entspricht. Durch diesen Schritt wird bewirkt, dass sich der Antriebsmotor 10, welcher mittels eines Freilaufs mit dem Antriebsstrang des Fahrrades gekoppelt ist, über den Freilauf nun im Eingriff mit dem Antriebsstrang befindet.

Sobald das Fahrerdrehmoment MF anschließend einen zweiten Fahrerdrehmoment-Schwellenwert MFS2 überschreitet, welcher hier einem Wert von 7 Nm entspricht, wird der Antriebsmotor 10 im Schritt 400 unter Vorgabe eines dritten Drehmomentes M3 betrieben, welches hier einem vierfachen Wert des Fahrerdrehmomentes MF entspricht.

Vorteilhaft erfolgt ein Übergang zwischen dem zweiten Drehmoment M2 und dem dritten Drehmoment M3 unter Verwendung einer Mehrzahl von Zwischenwerten, so dass ein sanfter Übergang zwischen dem zweiten Drehmoment M2 und dem dritten Drehmoment M3 erreicht wird.

Ferner wird vorzugsweise eine am Antriebsmotor 10 anliegende geschätzte Last auf Basis von Messwerten des Drehzahlsensors und des Drehmomentsensors ermittelt, um diese Information in die Festlegung jeweiliger Drehmomentwerte einfließen zu lassen.

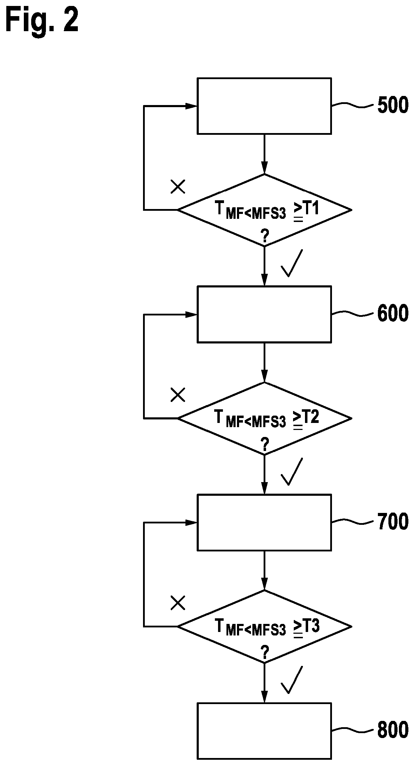

Figur 2 zeigt ein Flussdiagramm veranschaulichend Schritte eines Ausführungsbeispiels eines weiteren erfindungsgemäßen Verfahrens zur Ansteuerung eines elektrischen Antriebsmotors 10 eines elektrisch antreibbaren Fahrrades, wobei ein Ausgangszustand des Fahrrades hier ein Zustand ist, in welchem der Antriebsmotor 10 eine aktive Antriebsunterstützung bereitstellt, während der Fahrer ein Fahrerdrehmoment aufbringt.

Im Schritt 500 wird mittels einer Auswerteeinheit 30 des Fahrrades ein durch einen Fahrer des Fahrrades auf den Antriebsstrang ausgeübtes Fahrerdrehmoment MF und eine Trittfrequenz FT des Fahrers ermittelt, indem die Auswerteeinheit 30 Messsignale eines Drehzahlsensors und eines Drehmomentsensors des Fahrrades empfängt.

Sobald das Fahrerdrehmoment MF für einen ersten Zeitraum T1, welcher hier einem Wert von 200 ms entspricht, unterhalb eines dritten Fahrerdrehmoment-Schwellenwertes MFS3 liegt, welcher hier einem Wert von 7 Nm entspricht, wird der Antriebsmotor 10 im Schritt 600 unter Vorgabe einer dritten Solldrehzahl N3 in Höhe der aktuell ermittelten Trittfrequenz FT und unter Vorgabe eines vierten Drehmomentes M4 betrieben, welches hier einem Wert von 15 Nm entspricht.

Sobald das Fahrerdrehmoment MF anschließend für einen zweiten Zeitraum T2, welcher hier einem Wert von 800 ms entspricht, unterhalb des dritten Fahrerdrehmoment-Schwellenwertes MFS3 liegt, wird der Antriebsmotor 10 unter Vorgabe einer vierten Solldrehzahl N4, welche hier 80 % der aktuellen Trittfrequenz TF entspricht und unter Vorgabe eines fünften Drehmomentes M5 betrieben, welches hier einem Wert von 4 Nm entspricht.

Sobald das Fahrerdrehmoment MF anschließend für einen dritten Zeitraum T3, welcher hier einem Wert von 1,5 s entspricht, unterhalb des dritten Fahrerdrehmoment-Schwellenwertes MFS3 liegt, wird der elektrische Antriebsmotor 10 deaktiviert, um eine elektrische Energie einer Batterie 50 des Fahrrades einzusparen.

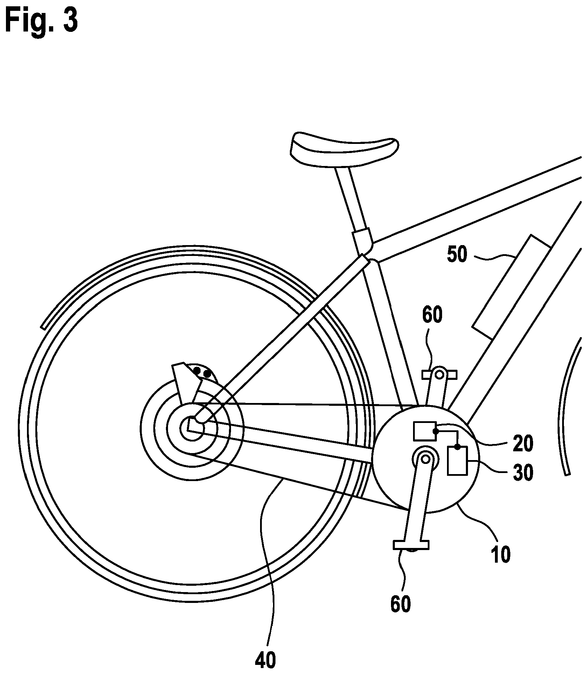

Figur 3 zeigt eine schematische Ansicht erfindungsgemäßer Komponenten eines Fahrrades. Das Fahrrad weist einen elektrischen Antriebsmotor 10 auf, welcher mittels einer wiederaufladbaren Batterie 50 mit elektrischer Energie versorgt wird. Der Antriebsmotor 10 ist eingerichtet, mittels eines (nicht gezeigten) Freilaufs mit einer Fahrradkette 40 des Fahrrades gekoppelt zu werden, um im eingekoppelten Zustand eine Antriebsunterstützung für das Fahrrad bereitzustellen. Das Fahrrad weist darüber hinaus zwei Pedale 60 auf, über welche der Fahrer des Fahrrades in der Lage ist, ein Fahrerdrehmoment MF auf die Fahrradkette 40 auszuüben. Der Antriebsmotor 10 umfasst eine Auswerteeinheit 30, welche mit einer Speichereinheit 20 informationstechnisch verbunden ist und welche auf Basis eines in der Speichereinheit 20 abgelegten Computerprogramms eingerichtet ist, sämtliche in dieser Offenbarung beschriebenen Schritte der erfindungsgemäßen Verfahren auszuführen.

## Patentansprüche

1. Verfahren zur Ansteuerung eines elektrischen Antriebsmotors (10) eines elektrisch antreibbaren Fahrrades aufweisend die Schritte:
• Ermitteln (100) einer Trittfrequenz (FT) eines Fahrers des Fahrrades,
• Betreiben (200) des elektrischen Antriebsmotors (10) unter Vorgabe
∘ einer ersten vordefinierten Solldrehzahl (N1) für den Antriebsmotor (10), welche geringer ist, als die Trittfrequenz (FT) des Fahrers, und
∘ eines ersten vordefinierten Drehmomentes (M1) für den Antriebsmotor (10),
sofern die ermittelte Trittfrequenz (FT) des Fahrers einen vordefinierten Trittfrequenz-Schwellenwert (FTS) überschreitet,
• Betreiben (300) des elektrischen Antriebsmotors (10) unter Vorgabe
∘ einer zweiten vordefinierten Solldrehzahl (N2) für den Antriebsmotor (10), welche höher ist, als die erste Solldrehzahl (N1), und
∘ eines zweiten vordefinierten Drehmomentes (M2) für den Antriebsmotor (10),
sofern ein durch den Fahrer auf den Antriebsstrang des Fahrrades ausgeübtes Fahrerdrehmoment (MF) einen ersten vordefinierten Fahrerdrehmoment-Schwellenwert (MFS1) überschreitet,
• Betreiben (400) des elektrischen Antriebsmotors (10) unter Vorgabe eines dritten vordefinierten Drehmomentes (M3) für den Antriebsmotor (10), sofern das Fahrerdrehmoment (MF) einen zweiten vordefinierten Fahrerdrehmoment-Schwellenwert (MFS2) überschreitet, welcher höher ist, als der erste Fahrerdrehmoment-Schwellenwert (MFS1),
wobei
• der Antriebsmotor (10) mittels eines Freilaufs mit dem Antriebsstrang des Fahrrades gekoppelt ist,
• das erste Drehmoment (M1) und das zweite Drehmoment (M2) jeweils maximal zulässige Drehmomente sind und derart festgelegt sind, dass diese im Wesentlichen keine Antriebsunterstützung bewirken, und
• das dritte Drehmoment (M3) ein Solldrehmoment ist und derart festgelegt ist, dass dieses eine vordefinierte Antriebsunterstützung bewirkt.

2. Verfahren nach Anspruch 1, wobei
• der Trittfrequenz-Schwellenwert (FTS) einem Wert von 5 Umdrehungen pro Minute bis 25 Umdrehungen pro Minute, bevorzugt einem Wert von 10 Umdrehungen pro Minute bis 20 Umdrehungen pro Minute und insbesondere bevorzugt einem Wert von 15 Umdrehungen pro Minute entspricht, und/oder
• die erste Solldrehzahl (N1) einem Wert von 60 % bis 99 %, bevorzugt einem Wert von 70 % bis 90 % und insbesondere bevorzugt einem Wert von 80 % der Trittfrequenz (FT) des Fahrers entspricht, und/oder
• die zweite Solldrehzahl (N2) im Wesentlichen der Trittfrequenz (FT) des Fahrers entspricht.

3. Verfahren nach einem der vorstehenden Ansprüche, wobei
• der erste Fahrerdrehmoment-Schwellenwert (MFS1) einem Wert von 1 Nm bis 9 Nm, bevorzugt einem Wert von 3 Nm bis 7 Nm und insbesondere bevorzugt einem Wert von 5 Nm entspricht., und/oder
• der zweite Fahrerdrehmoment-Schwellenwert (MFS2) einem Wert von 4 Nm bis 15 Nm, bevorzugt einem Wert von 6 Nm bis 12 Nm und insbesondere bevorzugt einem Wert von 7 Nm bis 9 Nm entspricht., und/oder
• das dritte Drehmoment (M3) mindestens einem zweifachen, bevorzugt mindestens einem dreifachen und insbesondere bevorzugt mindestens einem vierfachen Wert eines Fahrerdrehmomentes (MF) entspricht.

4. Verfahren nach einem der vorstehenden Ansprüche, wobei ein Übergang zwischen dem zweiten Drehmoment (M2) und dem dritten Drehmoment (M3) sukzessive durchgeführt wird.

5. Verfahren zur Ansteuerung eines elektrischen Antriebsmotors (10) eines elektrisch antreibbaren Fahrrades aufweisend die Schritte:
• Ermitteln (500) eines durch einen Fahrer des Fahrrades auf einen Antriebsstrang des Fahrrades ausgeübten Fahrerdrehmomentes (MF) und einer Trittfrequenz (FT) des Fahrers,
• Betreiben (600) des elektrischen Antriebsmotors (10) unter Vorgabe
∘ einer dritten vordefinierten Solldrehzahl (N3), und
∘ eines vierten vordefinierten Drehmomentes (M4) für den Antriebsmotor (10),
sofern das Fahrerdrehmoment (MF) für einen ersten vordefinierten Zeitraum (T1) unterhalb eines dritten vordefinierten Fahrerdrehmoment-Schwellenwertes (MFS3) liegt,
• Betreiben (700) des elektrischen Antriebsmotors (10) unter Vorgabe
∘ einer vierten vordefinierten Solldrehzahl (N4), welche geringer ist, als die dritte Solldrehzahl (N3), und
∘ eines fünften vordefinierten Drehmomentes (M5) für den Antriebsmotor (10),
sofern das Fahrerdrehmoment (MF) für einen zweiten vordefinierten Zeitraum (T2), welcher länger ist, als der erste Zeitraum (T1), unterhalb des dritten Fahrerdrehmoment-Schwellenwertes (MFS3) liegt, oder sofern eine Anzahl von Pedalumdrehungen einen vordefinierten Pedalumdrehungs-Schwellenwert überschreitet, während das Fahrerdrehmoment (MF) unterhalb des dritten Fahrerdrehmoment-Schwellenwertes (MFS3) liegt,
wobei
• der Antriebsmotor (10) mittels eines Freilaufs mit dem Antriebsstrang des Fahrrades gekoppelt ist, und
• das vierte Drehmoment (M4) und das fünfte Drehmoment (M5) jeweils maximal zulässige Drehmomente sind und derart festgelegt sind, dass diese im Wesentlichen keine Antriebsunterstützung bewirken.

6. Verfahren nach Anspruch 5, wobei
• die dritte vordefinierte Solldrehzahl (N3) im Wesentlichen der Trittfrequenz des Fahrers entspricht, und/oder
• der dritte Fahrerdrehmoment-Schwellenwert (MFS3) einem Wert von 4 Nm bis 15 Nm, bevorzugt einem Wert von 6 Nm bis 12 Nm und insbesondere bevorzugt einem Wert von 7 Nm bis 9 Nm entspricht, und/oder
• das Verfahren weiter ein Deaktivieren (800) des elektrischen Antriebsmotor (10) aufweist, wenn das Fahrerdrehmoment (MF) für einen dritten vordefinierten Zeitraum (T3), welcher länger ist, als der erste Zeitraum (T1) und der zweite Zeitraum (T2), unterhalb des dritten Fahrerdrehmoment-Schwellenwertes (MFS3) liegt, oder wenn sich die Trittfrequenz des Fahrers zunehmend verlangsamt, während das Fahrerdrehmoment (MF) unterhalb des dritten Fahrerdrehmoment-Schwellenwertes (MFS3) liegt.

7. Verfahren nach einem der vorstehenden Ansprüche, wobei ein jeweiliges Drehmoment für den Antriebsmotor (10) unter Berücksichtigung einer am Antriebsmotor (10) anliegenden geschätzten Last festgelegt wird.

8. Computerprogramm, welches eingerichtet ist, ein Verfahren nach einem der vorstehenden Ansprüche auszuführen.

9. Maschinenlesbares Speichermedium (20) auf welchem das Computerprogramm nach Anspruch 8 gespeichert ist.

10. Auswerteeinheit (30), welche eingerichtet ist ein Verfahren nach einem der Ansprüche 1 bis 7 auszuführen.

## Claims

1. Method for controlling an electric drive motor (10) of an electrically drivable bicycle comprising the following steps:
• determining (100) a cadence (FT) of a rider of the bicycle,
• operating (200) the electric drive motor (10) under specification
∘ of a first predefined target speed (N1) for the drive motor (10) which is lower than the cadence (FT) of the rider, and
∘of a first predefined torque (M1) for the drive motor (10) if the determined cadence (FT) of the rider exceeds a predefined cadence threshold value (FTS),
• operating (300) the electric drive motor (10) under specification
∘ of a second predefined target speed (N2) for the drive motor (10) which is higher than the first target speed (N1), and
∘ of a second predefined torque (M2) for the drive motor (10) if a rider torque (MF) exerted by the rider on the drive train of the bicycle exceeds a first predefined rider torque threshold value (MFS1),
• operating (400) the electric drive motor (10) under specification of a third predefined torque (M3) for the drive motor (10) if the rider torque (MF) exceeds a second predefined rider torque threshold value (MFS2) which is higher than the first rider torque threshold value (MFS1),
wherein
• the drive motor (10) is coupled to the drive train of the bicycle by means of a freewheel,
• the first torque (M1) and the second torque (M2) are each maximum permissible torques and are thus set in such a way
that they provide substantially no drive support, and
• the third torque (M3) is a target torque and is set in such a way that it provides a predefined drive support.

2. Method according to Claim 1, wherein
• the cadence threshold value (FTS) corresponds to a value of 5 revolutions per minute to 25 revolutions per minute, preferably a value of 10 revolutions per minute to 20 revolutions per minute and particularly preferably a value of 15 revolutions per minute, and/or
• the first target speed (N1) corresponds to a value of 60% to 99%, preferably a value of 70% to 90% and particularly preferably a value of 80% of the cadence (FT) of the rider, and/or
• the second target speed (N2) essentially corresponds to the cadence (FT) of the rider.

3. Method according to either of the preceding claims, wherein
• the first rider torque threshold value (MFS1) corresponds to a value of 1 Nm to 9 Nm, preferably a value of 3 Nm to 7 Nm and particularly preferably a value of 5 Nm, and/or
• the second rider torque threshold value (MFS2) corresponds to a value of 4 Nm to 15 Nm, preferably a value of 6 Nm to 12 Nm and particularly preferably a value of 7 Nm to 9 Nm, and/or
• the third torque (M3) corresponds to at least double, preferably at least triple and particularly preferably at least quadruple a rider torque (MF) value.

4. Method according to any of the preceding claims, wherein a transition between the second torque (M2) and the third torque (M3) is carried out successively.

5. Method for controlling an electric drive motor (10) of an electrically drivable bicycle comprising the following steps:
• determining (500) a rider torque (MF) exerted by a rider of the bicycle on a drive train of the bicycle and a cadence (FT) of the rider,
• operating (600) the electric drive motor (10) under specification
∘ of a third predefined target speed (N3), and
∘ of a fourth predefined torque (M4) for the drive motor (10) if the rider torque (MF) is below a third predefined rider torque threshold value (MFS3) for a first predefined period (T1),
• operating (700) the electric drive motor (10) under specification
∘of a fourth predefined target speed (N4) which is lower than the third target speed (N3), and
∘ of a fifth predefined torque (M5) for the drive motor (10) if the rider torque (MF) is below the third rider torque threshold value (MFS3) for a second predefined period (T2) which is longer than the first period (T1), or if a number of pedal revolutions exceeds a predefined pedal revolution threshold value while the rider torque (MF) is below the third rider torque threshold value (MFS3),
wherein
• the drive motor (10) is coupled to the drive train of the bicycle by means of a freewheel, and
• the fourth torque (M4) and the fifth torque (M5) are each maximum permissible torques and are set in such a way that they provide substantially no drive support.

6. Method according to Claim 5, wherein
• the third predefined target speed (N3) essentially corresponds to the cadence of the rider, and/or
• the third rider torque threshold value (MFS3) corresponds to a value of 4 Nm to 15 Nm, preferably a value of 6 Nm to 12 Nm and particularly preferably a value of 7 Nm to 9 Nm, and/or
• the method further comprises deactivating (800) the electric drive motor (10) if the rider torque (MF) is below the third rider torque threshold value (MFS3) for a third predefined period (T3) which is longer than the first period (T1) and the second period (T2), or if the cadence of the rider progressively slows down while the rider torque (MF) is below the third rider torque threshold value (MFS3).

7. Method according to any of the preceding claims, wherein a respective torque for the drive motor (10) is set taking into account an estimated load applied to the drive motor (10).

8. Computer program configured to execute a method according to any of the preceding claims.

9. Machine-readable storage medium (20) on which the computer program according to Claim 8 is stored.

10. Evaluation unit (30) configured to execute a method according to any of Claims 1 to 7.

## Revendications

1. Procédé de commande d'un moteur d'entraînement électrique (10) d'une bicyclette à entraînement électrique, comprenant les étapes suivantes :
• déterminer (100) une fréquence de pédalage (FT) d'un utilisateur de la bicyclette,
• faire fonctionner (200) le moteur d'entraînement électrique (10) avec application des spécifications suivantes
∘une première vitesse de rotation de consigne prédéfinie (N1) pour le moteur d'entraînement (10), laquelle est inférieure à la fréquence de pédalage (FT) du cycliste, et
∘ un premier couple prédéfini (M1) pour le moteur d'entraînement (10),
dans la mesure où la fréquence de pédalage (FT) déterminée du cycliste dépasse une valeur de seuil de fréquence de pédalage prédéfinie (FTS),
• faire fonctionner (300) le moteur d'entraînement électrique (10) avec application des spécifications suivantes
∘ une deuxième vitesse de rotation de consigne prédéfinie (N2) pour le moteur d'entraînement (10), laquelle est supérieure à la première vitesse de rotation de consigne (N1), et
∘ un deuxième couple prédéfini (M2) pour le moteur d'entraînement (10),
dans la mesure où un couple de cycliste (MF) exercé par le cycliste sur la chaîne cinématique de la bicyclette dépasse une première valeur de seuil de couple de cycliste prédéfinie (MFS1),
• faire fonctionner (400) le moteur d'entraînement électrique (10) avec application de la spécification d'un troisième couple prédéfini (M3) pour le moteur d'entraînement (10), dans la mesure où le couple de cycliste (MF) dépasse une deuxième valeur de seuil de couple de cycliste prédéfinie (MFS2), laquelle est supérieure à la première valeur de seuil de couple de cycliste (MFS1),
dans lequel
• le moteur d'entraînement (10) est accouplé à la chaîne cinématique de la bicyclette au moyen d'une roue libre,
• le premier couple (M1) et le deuxième couple (M2) sont respectivement des couples maximaux admissibles et sont fixés
de telle sorte qu'ils ne produisent sensiblement aucune assistance d'entraînement, et
• le troisième couple (M3) est un couple cible et est fixé de telle sorte qu'il produit une assistance d'entraînement prédéfinie.

2. Procédé selon la revendication 1, dans lequel
• la valeur de seuil de fréquence de pédalage (FTS) correspond à une valeur de 5 tours par minute à 25 tours par minute, de préférence à une valeur de 10 tours par minute à 20 tours par minute et de manière particulièrement préférée à une valeur de 15 tours par minute, et/ou
• la première vitesse de rotation de consigne (N1) correspond à une valeur de 60 % à 99 %, de préférence à une valeur de 70 % à 90 % et de manière particulièrement préférée à une valeur de 80 % de la fréquence de pédalage (FT) du cycliste, et/ou
• la deuxième vitesse de rotation de consigne (N2) correspond sensiblement à la fréquence de pédalage (FT) du cycliste.

3. Procédé selon l'une des revendications précédentes, dans lequel
• la première valeur de seuil de couple de cycliste (MFS1) correspond à une valeur de 1 Nm à 9 Nm, de préférence à une valeur de 3 Nm à 7 Nm et de manière particulièrement préférée à une valeur de 5 Nm, et/ou
• la deuxième valeur de seuil de couple de cycliste (MFS2) correspond à une valeur de 4 Nm à 15 Nm, de préférence à une valeur de 6 Nm à 12 Nm et de manière particulièrement préférée à une valeur de 7 Nm à 9 Nm, et/ou
• le troisième couple (M3) correspond à au moins le double, de préférence au moins le triple et de manière particulièrement préférée au moins le quadruple d'une valeur d'un couple de cycliste (MF).

4. Procédé selon l'une des revendications précédentes, dans lequel une transition entre le deuxième couple (M2) et le troisième couple (M3) est effectuée de manière progressive.

5. Procédé de commande d'un moteur d'entraînement électrique (10) d'une bicyclette à entraînement électrique, comprenant les étapes suivantes :
• déterminer (500) un couple de cycliste (MF) exercé par un utilisateur de la bicyclette sur une chaîne cinématique de la bicyclette et une fréquence de pédalage (FT) du cycliste,
• faire fonctionner (600) le moteur d'entraînement électrique (10) avec application des spécifications suivantes
∘ une troisième vitesse de rotation de consigne prédéfinie (N3), et
∘un quatrième couple prédéfini (M4) pour le moteur d'entraînement (10),
dans la mesure où le couple de cycliste (MF) se situe au-dessous d'une troisième valeur de seuil de couple de cycliste prédéfinie (MFS3) pendant une première période de temps prédéfinie (T1),
• faire fonctionner (700) le moteur d'entraînement électrique (10) avec application des spécifications suivantes
∘ une quatrième vitesse de rotation de consigne prédéfinie (N4), laquelle est inférieure à la troisième vitesse de rotation de consigne (N3), et
∘ un cinquième couple prédéfini (M5) pour le moteur d'entraînement (10),
dans la mesure où le couple de cycliste (MF) se situe au-dessous de la troisième valeur de seuil de couple de cycliste (MFS3) pendant une deuxième période de temps prédéfinie (T2), laquelle est plus longue que la première période de temps (T1), ou dans la mesure où un nombre de rotations de pédale dépasse une valeur de seuil de rotation de pédale prédéfinie alors que le couple de cycliste (MF) se situe au-dessous de la troisième valeur de seuil de couple de cycliste (MFS3),
dans lequel
• le moteur d'entraînement (10) est accouplé à la chaîne cinématique de la bicyclette au moyen d'une roue libre, et
• le quatrième couple (M4) et le cinquième couple (M5) sont respectivement des couples maximaux admissibles et sont fixés de telle sorte qu'ils ne produisent sensiblement aucune assistance d'entraînement.

6. Procédé selon la revendication 5, dans lequel
• la troisième vitesse de rotation de consigne prédéfinie (N3) correspond sensiblement à la fréquence de pédalage du cycliste, et/ou
• la troisième valeur de seuil de couple de cycliste (MFS3) correspond à une valeur de 4 Nm à 15 Nm, de préférence à une valeur de 6 Nm à 12 Nm et de manière particulièrement préférée à une valeur de 7 Nm à 9 Nm, et/ou
• le procédé comprend en outre la désactivation (800) du moteur d'entraînement électrique (10) lorsque le couple de cycliste (MF) se situe au-dessous de la troisième valeur de seuil de couple de cycliste (MFS3) pendant une troisième période de temps prédéfinie (T3), laquelle est plus longue que la première période de temps (T1) et que la deuxième période de temps (T2), ou lorsque la fréquence de pédalage du cycliste ralentit de plus en plus alors que le couple de cycliste (MF) se situe au-dessous du troisième seuil de couple de cycliste (MFS3).

7. Procédé selon l'une des revendications précédentes, dans lequel un couple respectif pour le moteur d'entraînement (10) est fixé en tenant compte d'une charge estimée appliquée au moteur d'entraînement (10).

8. Programme informatique, lequel est conçu pour mettre en œuvre un procédé selon l'une des revendications précédentes.

9. Support de stockage lisible par machine (20), sur lequel est stocké le programme informatique selon la revendication 8.

10. Unité d'évaluation (30), laquelle est conçue pour mettre en œuvre un procédé selon l'une des revendications 1 à 7.
